(19) Europäisches Patentamt

European Patent Office

Office européen des brevets

(11) **EP 3 467 734 A1**

(12) **EUROPEAN PATENT APPLICATION**

(43) Date of publication:
**10.04.2019 Bulletin 2019/15**

(51) Int Cl.:
**G06Q 10/06** (2012.01)

(21) Application number: **18198540.9**

(22) Date of filing: **04.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.10.2017 IN 201721035511**

(71) Applicant: **Tata Consultancy Services Limited Maharashtra (IN)**

(72) Inventors:
• **BYRAVAN, SATISH**
  **600096 Chennai, Tamil Nadu (IN)**
• **PADMANABHAN, KISHORE**
  **600113 Chennai, Tamil Nadu (IN)**

• **NATARAJAN, VIJAYARANGAN**
  **600096 Chennai, Tamil Nadu (IN)**
• **NARASIMHADEVARA, KARTICK**
  **600096 Chennai, Tamil Nadu (IN)**
• **GANESAN, VISWANATH KUMAR**
  **600096 Chennai, Tamil Nadu (IN)**
• **GUDLA, SREEDHAR**
  **600096 Chennai, Tamil Nadu (IN)**
• **PERUMAL, RAMESH BABU SANGAIAHA**
  **600096 Chennai, Tamil Nadu (IN)**
• **BALAKRISHNAN, SUBRAMANIAM**
  **600096 Chennai, Tamil Nadu (IN)**
• **JAGANNATHAN, BALAJI**
  **600096 Chennai, Tamil Nadu (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **SYSTEM AND METHOD FOR FLIGHT DELAY PREDICTION**

(57) This disclosure relates generally to a system and method to predict flight delay. Moreover, the embodiments herein further provide the system and method to predict timings of an airline in real time by considering historical operations (arrival and departure) data, historical airport data (captured at the time of arrival and departure) including congestion information, and weather data of the airport. The flight delays involves prediction of arrival and departure times of flight. Herein, the method categorizes input data related to an airline history, airline network, airport data and various airline reference data. Further, the method analyses the cause of delay which may be due to maintenance issues with the aircraft, fuelling, weather, congestion in air traffic, and security issues etc. The system and method computes the flight delay due to multiple airline operations and different input datasets using stochastic approximation approach.

Fig. 2

EP 3 467 734 A1

## Description

### PRIORITY

The present application claims priority to India Application (Title: system and method for flight delay prediction) No. 201721035511, filed in India on October 06, 2017.

### FIELD OF THE INVENTION

The disclosure herein generally relates to the field of civil aviation, and, more particularly, but not specifically, a system and method for predicting flight delay at an expected level.

### BACKGROUND

In the field of civil aviation, flight time prediction is a process of calculating an expected flight delay at an expected level in advance. The expected flight delay may include expected time of arrival (ETA), expected time of departure (ETD) as well airlines operations such as taxi-in, taxi-out and airtime of the aircraft. It has been observed that delays in the scheduled departure times at the gates in origin airports as well as from the scheduled arrival times at the gates in the destination airports are quite frequent in domestic and international flights. These delays are a major source of frustration and cost for the passengers as well airlines. Further, the delay and disruption costs account to about 8% of airline revenues. It is to be noted that the flights are more frequently delayed due to weather, airport and airlines operations, congestion, crew connectivity, passenger connectivity and so on, and there has been continual interest and potential motivation shown by airlines across the world on estimation and prediction of accurate flight departure times and arrival time information to their passenger as well as travelers. The delays are typically a stochastic phenomenon. Therefore, it is needed to analyze their entire probability distributions.

Conventional method(s) and system(s) for flight delay prediction are predicting individual factors and there is no holistic arrangement to calculate the flight delay prediction by utilizing all the possible parameters pertaining to an airlines system. Moreover, since the conventional methods are utilizing less number of parameters, the accuracy is less.

Hence, the operational delay and disruptions need to be addressed by utilizing intelligent solution platforms integrating inputs from planning and real time operations. The flight delay prediction can be achieved by the effective coordination between multiple departments, and operational resources in airports across the network. The main factors to be predicted include ETA and ETD. Failure to predict ETA and ETD may poses a number of issues and mitigation challenges in the airline operations.

### SUMMARY OF THE INVENTION

Embodiments of the present disclosure present technological improvements as solutions to one or more of the above-mentioned technical problems recognized by the inventors in conventional systems. For example, in one embodiment, a system configured to predict flight delay is provided. The system includes at least one memory with a plurality of instructions and one or more hardware processors communicatively coupled with the at least one memory to execute one or more modules. Further, the system comprises a receiving module that is configured to receive a historical operation data of the flight, a historical airlines data, real time airlines data, planned airlines data, aircraft type data, a historical weather data and a real time weather data, as an input to the system. An operation characterization module of the system is configured to analyze one or more operational scenarios considering one or more dimensional aspects and the received input to the system, wherein the one or more operational scenarios includes fleet deployment pattern, network flow characterization, and operational preferences. A learning module of the system is configured to learn the analyzed one or more operational scenarios, wherein the learning of operational scenarios defines one or more operational levers, wherein the one or more operational levers include needs of a crew, operations of one or more gates, and a rescheduling priorities, a determination module configured to predict taxi-in time, taxi-out time, and air time of the flight, wherein the taxi-in time is defined as time between a wheels-on time and a gate-in time, taxi-out time is defined as time between the actual pushback and takeoff of the flight, and the air time of the flight includes total time from the moment that an aircraft first moves under its own power for the purpose of taking off until the moment the aircraft comes to rest at the end of the flight, and finally a decision module of the system is configured to predict flight delay of the aircraft. Wherein, the decision module of the system uses a real time flight information, one or more operational scenarios, one or more operational levers, and the predicted time of taxi-in, taxi-out, and air time of the aircraft.

In another embodiment, a processor-implemented method to predict flight delay is provided. The method includes one or more steps such as receiving a historical operation data of the flight, a historical airport data, and a weather data, as an input at a receiving module of the system, analyzing one or more operational scenarios at an operation characterization module of the system considering one or more dimensional aspects and the received input, wherein the one or more operational scenarios includes fleet deployment pattern, network flow characterization, and operational preferences. Further, the method includes learning of the analyzed one or more operational scenarios at a learning module of the system. Wherein the learning of operational scenarios defines one or more operational levers. It would be appreciated that the one or more operational levers include needs of a crew, operations of one or more gates, and a rescheduling priorities. Further the process includes predicting a taxi-in time, a taxi-out time, and air time of the flight at a determination module of the system, wherein the taxi-in time is defined as time between a wheels-on time and a gate-in time, taxi-out time is defined as time between the actual pushback and takeoff of the flight, and the air time of the flight includes total time from the moment that an aircraft first moves under its own power for the purpose of taking off until the moment the aircraft comes to rest at the end of the flight, and predicting flight delay of the aircraft at a decision module of the system using a real time flight information , one or more operational scenarios, one or more operational levers, and the predicted time of taxi-in, taxi-out, and air time of the aircraft.

In yet another embodiment, a non-transitory computer readable medium storing one or more instructions which when executed by a processor on a system, cause the processor to perform method for predicting flight delay. The one or more instructions comprising receiving a historical operation data of the flight, a historical airport data, and a weather data, as an input at a receiving module of the system, analyzing one or more operational scenarios at an operation characterization module of the system considering one or more dimensional aspects and the received input, wherein the one or more operational scenarios includes fleet deployment pattern, network flow characterization, and operational preferences. Further, the method includes learning of the analyzed one or more operational scenarios at a learning module of the system. Wherein the learning of operational scenarios defines one or more operational levers. It would be appreciated that the one or more operational levers include needs of a crew, operations of one or more gates, and a rescheduling priorities. Further the process includes predicting a taxi-in time, a taxi-out time, and air time of the flight at a determination module of the system, wherein the taxi-in time is defined as time between a wheels-on time and a gate-in time, taxi-out time is defined as time between the actual pushback and takeoff of the flight, and the air time of the flight includes total time from the moment that an aircraft first moves under its own power for the purpose of taking off until the moment the aircraft comes to rest at the end of the flight, and predicting flight delay of the aircraft at a decision module of the system using a real time flight information , one or more operational scenarios, one or more operational levers, and the predicted time of taxi-in, taxi-out, and air time of the aircraft.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system to predict flight delay of an aircraft, according to some embodiments of the present disclosure;

FIG. 2 is a schematic architecture to explain flight delay modules and components according to an embodiments of the present disclosure; and

FIG. 3 is a flow diagram to illustrate a method to predict a flight delay of an aircraft in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

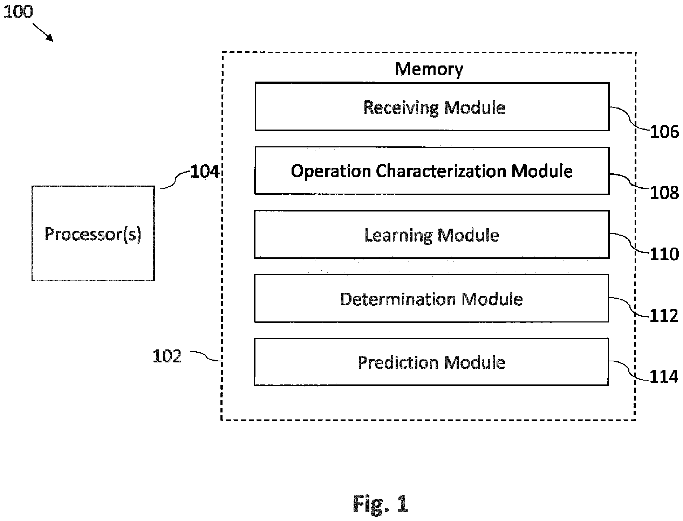

Referring now to the drawings, and more particularly to FIG. 1 through 3, where similar reference characters denote corresponding features consistently throughout the figures, there are shown preferred embodiments and these embodiments are described in the context of the following exemplary system and/or method.

Referring FIG. 1, a system (100) is configured to predict flight delay. The system (100) executes the estimation, in real time the delays, by considering historical operations (arrival and departure) data, historical airport data (captured at the time of arrival and departure) including congestion information, weather data, etc. The system (100) configured to categorize input data related to airline history, airline network, airport data and various airlines reference data. Further, the system (100) is configured to analyze the one or more causes of flight delays which may be due to maintenance issues with an aircraft, fuelling, weather, congestion in air traffic, security issues etc. In addition to this, the system (100) will compute flight delay due to multiple airline operations and different input datasets using stochastic approximation approach.

In the preferred embodiment, the system (100) comprises at least one memory (102) with a plurality of instructions and one or more hardware processors (104) which are communicatively coupled with the at least one memory (102) to execute modules therein.

The hardware processor (104) may be implemented as one or more microprocessors, microcomputers, microcontrollers, digital signal processors, central processing units, state machines, logic circuitries, and/or any devices that manipulate signals based on operational instructions. Among other capabilities, the hardware processor (104) is configured to fetch and execute computer-readable instructions stored in the memory (102).

In the preferred embodiment of the disclosure, a receiving module (106) of the system (100) is configured to receive a plurality of historical operation data of the flight, a historical airlines data, real time airlines data, planned airlines data, an aircraft type data, a historical weather data and a real time weather data, as an input to the system (100).

Further, the receiving module (106) is also configured to receive a plurality of data including a baseline data, a real time invasive data, a planned data, a real time non-invasive data, a reference data and a future estimated data. Here, the baseline data includes historical airlines operational data. The real time invasive data includes all airlines operational data, navigation data and movement data. The planned data includes Standard Time Arrival (STA)/Standard Time Departure (STD) data and block times. The real time non-invasive data includes weather data, congestion data and Air Traffic Control (ATC) alerts. The reference data includes weights, Opex (Operating expense) and costs. The future estimated data includes Expected Time of Departure (ETD) data, Expected Time of Arrival (ETA) data, taxi data, weather data, and other internal and external estimated data.

Furthermore, the receiving module (106) of the system (100) is configured to receive the set of airline data including a flight data, a sector data, a movement data, an aircraft data, a navigation data, an air conditioner (A/C) performance data, a set of rules and policies data, and an airport data. The flight data includes towing, zero fuel weight, expected time of departure (ETD), route selection, preferred route, flight level, cost option, fuel parameters, point of beginning, and performance schedules. The sector data includes holding, taxi, alternate airports, restrictions, congestion. The movement data includes OOOI Data (gate Out, wheels Off, wheels On, gate In), time, fuel, waypoints data, path deviation. The aircraft data includes max weights, cruise schedules (actuals). The weather data includes wind direction, speed, temperature, weather events. The navigation data includes route, waypoints, airways, standard instrument departure (SID), standard terminal arrival route (STAR). The A/C performance data includes true air speed, fuel flow, and range. The set of rules and policies includes company information, policies and procedures. The airport data includes runway, declaration of performance, key performance indicators (KPIs), resources, gate info, and flight schedules congestion.

In the preferred embodiment of the disclosure, an operation characterization module (108) of the system (100) is configured to analyze one or more operational scenarios considering one or more dimensional aspects and the received input to the system (100). The one or more operational scenarios includes fleet deployment pattern, network flow characterization, and operational preferences. The one or more dimensional aspects include origin destination pairs and connections, a flight frequency, an operational delay classification, clock times, fleet types, an operational crew data and a network model. The one or more operational scenarios are utilized to ensure whether an outcome is capable of enabling a decision maker to define operational priorities and levers to manage delays and disruptions.

The operation characterization module (108) utilizes the historical operations data (for example, D0/D15/D30 inputs, min/max/ave block times, taxi times, ON/OFF/other statistics), the reference Data (for example, Airport gate information, runway information) and the planning data (for example, Markets, i.e., origin destination pairs, Cost inputs, operational fleet information) to analyze and define a set of operational scenarios. The analysis is based on a plurality of dimensional aspects not limiting to origin destination pairs and connections, the flight frequency, the operational delay classification, clock times, fleet types, Operations crew data, and network models (for example, point to point/hub and spoke/mixed). The set of operational scenarios typically include extracting and identifying fleet deployment patterns, network flow characterization, and operational preferences. The set of operational scenarios are utilized to ensure whether an outcome is capable of enabling a decision maker to define operational priorities and levers to manage delays and disruptions.

In the preferred embodiment of the disclosure, a learning module (110) of the system (100) is configured to learn the analyzed one or more operational scenarios. The learning of operational scenarios defines one or more operational levers. Herein, the one or more operational levers include needs of a crew, operations of one or more gates, and a rescheduling priorities.

It would be appreciated that the learning module (110) of the system (100) comprises a set of models to analyze one or more operational scenarios of the airport and airlines. The set of models includes a set of basic statistical models, a set of advanced statistical models, a probabilistic graphical model, a stochastic simulation model, a set of critical path methods and an impact analysis model. The set of advanced statistical models includes but not limited to cluster model, fleet profiling models and diffusion models.

In addition to this, there are a set of parameters, affecting the airlines journey, include an en-route time, an inbound gate time, a turnaround time and an outbound gate time. A set of factors affecting the en-route time includes weather, type of the aircraft, restrictions and network congestion. A set of factors affecting the inbound gate time includes an airport congestion, a runway type, a gate availability, a distance between runway and gate, a wind direction and a runway location, an aircraft marshalling, an ACFT type and gate restrictions. A set of factors affecting the turnaround time includes baggage offloading, baggage on-loading, cargo offloading, cargo on-loading, routine check, maintenance, pilot error report, crew offloading, crew on-loading, gate jet stream, passenger offloading, passenger on-loading, fuelling, APU and Pre-arrival tasks. A set of factors affecting outbound gate time includes distance between gate and runway, airport congestion and wind direction and runway location.

In the preferred embodiment, a determination module (112) of the system (100) is configured to predict taxi-in time, taxi-out time, and air time of the flight. It would be appreciated that the taxi-out time and taxi-in time of the flight depends on one or more factors such as runway configuration, downstream restrictions, and arrival queue.

The taxi-in time is defined as time between a wheels-on time and a gate-in time. This is the time that the aircraft spends on the airport surface with engines on, and includes the time spent on the taxiway system and in the runways queues. The wheels-on is the stage when the aircraft touches down the ground. The gate-in is the process of arrival of the aircraft to the gate or the parking position. On arrivals, the runway time is the time the aircraft touches down on the runway. The arrival gate time includes the time the aircraft takes to taxi to the gate. The taxi-in is the unimpeded time to traverse the surface from the runway exit until existing the movement area. Unimpeded taxi-in time is the estimated taxi-in time for the aircraft by carrier under optimal operating conditions.

The taxi-in time of the aircraft is represented by three components as the unimpeded taxi-in time, the time spent in the arrival queue, and the congestion delay due to ramp and taxiway interactions. Furthermore, there are other factors such as runway configuration, the airline/terminal, weather conditions of the terminal, downstream restrictions of the airport, and the arrival queue of the aircraft over the airport.

The taxi-out time is defined as time between the actual pushback and takeoff of the flight. This is the time that the aircraft spends on the airport surface with engines on, and includes the time spent on the taxiway system and in the runway queues. It would be appreciated that the surface emissions from departures are therefore closely linked to the taxi-out times.

The air time of the flight includes total time from the moment that an aircraft first moves under its own power for the purpose of taking off until the moment the aircraft comes to rest at the end of the flight. The air time of the flight depends on one or more factors such as a congested airspace, weather, traffic control actions, and a type of the aircraft.

It would be appreciated that the determination module (112) is also configured to analyze one or more received airline data by utilizing a plurality of models of the system. The plurality of models include a network planning model, one or more statistical model and a delay prediction engine. Here, a set of attributes associated with the set of airlines data is identified. For example, the set of attributes include day of week, seasons, OD (Origin-Destination) pair, tail number and epoch. Further, a probability distribution is calculated for departure delay and arrival delay by utilizing the set of parameters.

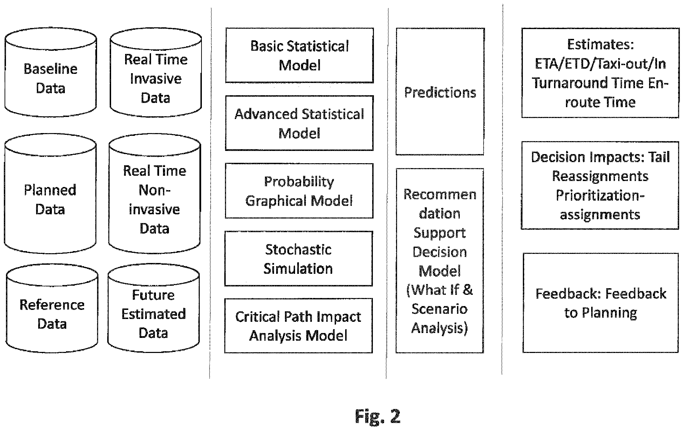

In one aspect, the network planning model of the system (100) receives the aircraft network data for example, operating airline, marketing airline (if a code-share leg), origin, destination, flight number, departure and arrival times, equipment, days of operation, leg mileage and flight time, a neighbors' airport data (for example, Gate, Runway root, distance between each airports), air traffic data and weather data and suggests an alternative path when there is any aircraft delay as shown in fig. 2.

In another aspect, the one or more statistical model receives a plurality of airline historical data (for example, Airport data, weather data, gate delay, taxi-out delay, airborne delay and taxi-in delay) and provides Model to fit real time data and predict delay.

In yet another aspect, the delay prediction engine receives one or more delay parameters including the network planning parameters, model to fit real time data and the predicted delay. Further, accurate arrival delay is calculated from the one or more delay parameters as-

$$\text{Arrival delay} = \text{Departure delay} + \text{Taxi-Out Time} + \text{Air Time} + \text{Taxi-In Time} \quad (2)$$

wherein, it is a probability distribution summation that is computed using a convolution method.

In the preferred embodiment of the disclosure, the decision module (114) of the system (100) is configured to predict flight delay using a real time flight information, one or more operational scenarios, one or more operational levers, and the predicted time of taxi-in, taxi-out, and air time of the aircraft.

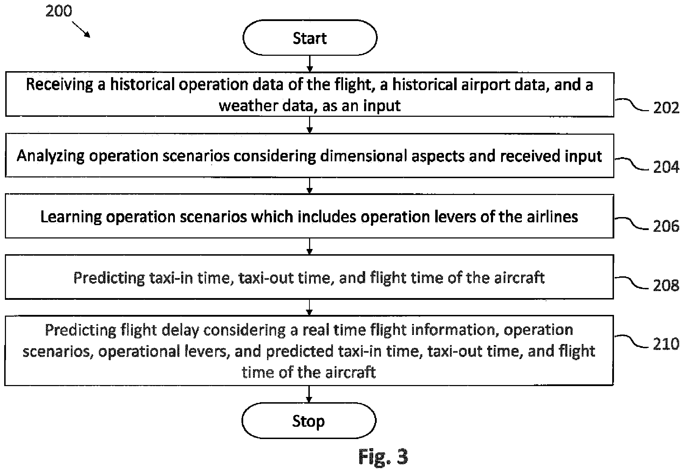

Referring FIG. 3, a processor-implemented method (200) to predict flight delay is provided. The processor-implement method comprising one or more steps to execute the estimation, in real time the delays, by considering historical operations (arrival and departure) data, historical airport data (captured at the time of arrival and departure) including congestion information, weather data, etc. Further, the process categorizes input data related to airline history, airline network, airport data and various airlines reference data. Further, the process analyzes the one or more causes of flight delays which may be due to maintenance issues with the aircraft, fuelling, weather, congestion in air traffic, security issues etc. Finally, it computes flight delay which depends on multiple airline operations and different input datasets using stochastic approximation approach.

Initially, at the step (202), a historical operation data of the flight, a historical airport data, and a weather data are received as an input at a receiving module (106) of the system (100).

In the preferred embodiment of the disclosure, at the next step (204), one or more operational scenarios are analyzed at an operation characterization module (108) of the system (100) considering one or more dimensional aspects and the received input to the system (100). It would be appreciated that the one or more operational scenarios includes fleet deployment pattern, network flow characterization, and operational preferences.

In the preferred embodiment of the disclosure, at the next step (206), the one or more analyzed operational scenarios are learned at a learning module (110) of the system (100). It is to be noted that the learning of operational scenarios defines one or more operational levers, wherein the one or more operational levers include needs of a crew, operations of one or more gates, and a rescheduling priorities.

In the preferred embodiment of the disclosure, at the next step (208), a taxi-in time, a taxi-out time, and air time of the flight are predicted at a determination module (112) of the system (100). It would be appreciated that the taxi-out time and taxi-in time of the flight depends on one or more factors such as runway configuration, downstream restrictions, and arrival queue.

The taxi-in time is defined as time between a wheels-on time and a gate-in time, taxi-out time is defined as time between the actual pushback and takeoff of the flight, and the air time of the flight includes total time from the moment that an aircraft first moves under its own power for the purpose of taking off until the moment the aircraft comes to rest at the end of the flight.

In the preferred embodiment of the disclosure, at the last step (210), flight delay of the aircraft is predicted at a decision module (114) of the system (100) considering a real time flight information across the network, one or more operational scenarios, one or more operational levers, and the predicted time of taxi-in, taxi-out, and air time of the aircraft.

It would be appreciated that the delay prediction includes a prediction phase, a set of prediction elements, a set of prediction touch points and a set of system of interest. The prediction phase includes a planning phase and an en-route phase. The set of prediction elements include PDC (Passenger Door Closed), CDC (Cargo Door Closed), BRL (Break Released), ASM (Aircraft Start Moving), OUT (Out of Terminal), OFF (Off the ground), ON (On the ground), IN (In the terminal, ASM (Aircraft Stopped Moving), PDO (Passenger Door Open), CDO (Cargo Door Open) and BRS (Break Set). The set of prediction touch points includes a propagate network time, an en-route time, a gate time, a turnaround time. The set of system of interest include an ACARS (Aircraft Communications Addressing, and Reporting System), a FLIFO (Flight Information), a SHARE (Schedule Airlines Reservation System), a SWIM (System Wide Information Management System), a Sabre FPM (Flight Plan Manager), a TAF (Terminal Aerodrome Forecast), an Airport DB (Airport Configurations) and a Self-Park system. The FPM is a tool for developing and comparing routes to obtain the least cost route solution. Further, the FPM can easily amend a route, optimize from station to station, fix to fix, station to fix, and fix to station. Additionally, the FPM is capable of building a route to avoid certain fixes, Flight Information Region (FIR) boundaries, and segments of airways. Additionally, the FPM can also accept a route or portion of a route using the "cut and paste" function. The FPM is also able to display a route or routes in comparison to each other and overlay them on a selected weather chart as well as graphically display the profile of a routing with terrain, restricted areas, and airway restriction features. Further, the Self-park provides automated docking guidance to arriving aircraft, allowing the aircraft to safely park at the gate.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of flight delay prediction in real time. The embodiment, thus provides a system and method to predict flight delay. Moreover, the embodiments herein further provide a system and method to predict timings of an airline in real time by considering historical operations (arrival and departure) data, historical airport data (captured at the time of arrival and departure) including congestion information, and weather data of the airport. The flight delays involves prediction of arrival and departure times of flight. Herein, the method categorizes input data related to an airline history, airline network, airport data and various airline reference data. Further, the method analyses the cause of delay which may be due to maintenance issues with the aircraft, fuelling, weather, congestion in air traffic, and security issues etc. The system and method computes the flight delay due to multiple airline operations and different input datasets using stochastic approximation approach.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

## Claims

1. A system to predict flight delay, the system comprising:

   at least one memory storing a plurality of instructions;
   one or more hardware processors communicatively coupled with the at least one memory, wherein the one or more hardware processors are configured to execute one or more modules;
   a receiving module configured to receive a plurality of historical operation data of the flight, a historical data of an airline operating the flight, a real time airlines data, a planned airlines data, an aircraft type data, a historical weather data and a real time weather data as an input for the system;
   an operation characterization module configured to analyze one or more operational scenarios considering one or more dimensional aspects and the received input to the system, wherein the one or more operational scenarios includes fleet deployment pattern, network flow characterization, and operational preferences;
   a learning module configured to learn the analyzed one or more operational scenarios, wherein the learning of operational scenarios comprises one or more operational levers, wherein the one or more operational levers include needs of a crew, operations of one or more gates, and a rescheduling priorities;

a determination module configured to predict a taxi-in time, a taxi-out time, and an air time of the flight, wherein the taxi-in time is defined as time between a wheels-on time and a gate-in time, taxi-out time is defined as time between the actual pushback and takeoff of the flight, and the air time of the flight includes total time from a time that the aircraft first moves under its own power for the purpose of taking off until the time the aircraft comes to rest at the end of the flight; and

a prediction module configured to predict the flight delay using a real time flight information, one or more operational scenarios, one or more operational levers, and the predicted taxi-in time, taxi-out time, and air time of the flight.

2. The system claimed in claim 1, wherein the one or more dimensional aspects include origin destination pairs and connections, a flight frequency, an operational delay classification, clock times, fleet types, an operational crew data and a network model.

3. The system claimed in claim 1, wherein the air time of the flight depends on one or more factors including a congested airspace, weather, traffic control actions, and type of the aircraft.

4. The system claimed in claim 1, wherein the taxi-out time and the taxi-in time of the flight depends on one or more factors including runway configuration, downstream restrictions, and arrival queue.

5. A processor-implemented method to predict flight delay, the processors-implemented method comprising one or more steps of:

receiving, via the one or more hardware processors, a historical operation data of the flight, a historical airport data, and a weather data, as an input at a receiving module of the system;

analyzing, via the one or more hardware processors, one or more operational scenarios at an operation characterization module of the system considering one or more dimensional aspects and the received input, wherein the one or more operational scenarios includes fleet deployment pattern, network flow characterization, and operational preferences;

learning, via the one or more hardware processors, the analyzed one or more operational scenarios at a learning module of the system, wherein the learning of operational scenarios defines one or more operational levers, wherein the one or more operational levers include needs of a crew, operations of one or more gates, and a rescheduling priorities;

predicting, via the one or more hardware processors, a taxi-in time, a taxi-out time, and air time of the flight at a determination module of the system, wherein the taxi-in time is defined as time between a wheels-on time and a gate-in time, taxi-out time is defined as time between the actual pushback and takeoff of the flight, and the air time of the flight includes total time from the moment that an aircraft first moves under its own power for the purpose of taking off until the moment the aircraft comes to rest at the end of the flight;

predicting, via the one or more hardware processors, flight delay at a decision module of the system considering a real time flight information, one or more operational scenarios, one or more operational levers, and the predicted time of taxi-in, taxi-out, and air time of the aircraft.

6. The method claimed in claim 5, wherein the one or more dimensional aspects include origin destination pairs and connections, a flight frequency, an operational delay classification, a clock times, fleet types, an operational crew data and a network model.

7. The method claimed in claim 5, wherein the air time of the flight depends on one or more factors such as a congested airspace, weather, traffic control actions, and a type of the aircraft.

8. The method claimed in claim 5, wherein the taxi-out time and taxi-in time of the flight depends on one or more factors such as runway configuration, downstream restrictions, and arrival queue.

9. A non-transitory computer readable medium storing one or more instructions which when executed by a processor on a system, cause the processor to perform method for predicting flight delay comprising:

receiving, via the one or more hardware processors, a historical operation data of the flight, a historical airport data, and a weather data, as an input at a receiving module of the system;

analyzing, via the one or more hardware processors, one or more operational scenarios at an operation characterization module of the system considering one or more dimensional aspects and the received input, wherein the one or more operational scenarios includes fleet deployment pattern, network flow characterization, and operational preferences;

learning, via the one or more hardware processors, the analyzed one or more operational scenarios at a learning module of the system, wherein the learning of operational scenarios defines one or more operational levers, wherein the one or more operational levers include needs of a crew, operations of one or more gates, and a rescheduling priorities;

predicting, via the one or more hardware processors, a taxi-in time, a taxi-out time, and air time of the flight at a determination module of the system, wherein the taxi-in time is defined as time between a wheels-on time and a gate-in time, taxi-out time is defined as time between the actual pushback and takeoff of the flight, and the air time of the flight includes total time from the moment that an aircraft first moves under its own power for the purpose of taking off until the moment the aircraft comes to rest at the end of the flight;

predicting, via the one or more hardware processors, flight delay at a decision module of the system considering a real time flight information, one or more operational scenarios, one or more operational levers, and the predicted time of taxi-in, taxi-out, and air time of the aircraft.

100

Memory

| Receiving Module | 106 |

| Operation Characterization Module | 108 |

Processor(s) 104

| Learning Module | 110 |

| Determination Module | 112 |

102

| Prediction Module | 114 |

**Fig. 1**

| Baseline Data | Real Time Invasive Data | Basic Statistical Model | Predictions | Estimates: ETA/ETD/Taxi-out/In Turnaround Time En-route Time |
|---|---|---|---|---|
| Planned Data | Real Time Non-invasive Data | Advanced Statistical Model | | Decision Impacts: Tail Reassignments Prioritization-assignments |
| | | Probability Graphical Model | Recommendation Support Decision Model (What If & Scenario Analysis) | |
| Reference Data | Future Estimated Data | Stochastic Simulation | | Feedback: Feedback to Planning |
| | | Critical Path Impact Analysis Model | | |

**Fig. 2**

200

Start

Receiving a historical operation data of the flight, a historical airport data, and a weather data, as an input ⌐ 202

Analyzing operation scenarios considering dimensional aspects and received input ⌐ 204

Learning operation scenarios which includes operation levers of the airlines ⌐ 206

Predicting taxi-in time, taxi-out time, and flight time of the aircraft ⌐ 208

Predicting flight delay considering a real time flight information, operation scenarios, operational levers, and predicted taxi-in time, taxi-out time, and flight time of the aircraft ⌐ 210

Stop

Fig. 3

Europäisches
Patentamt

European
Patent Office

Office européen
des brevets

**EUROPEAN SEARCH REPORT**

Application Number

EP 18 19 8540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/002548 A1 (ROUNDTREE BRIAN [US]) 3 January 2002 (2002-01-03) * paragraphs [0021] - [0024], [0027] - [0051]; figures 1-8 * ----- | 1-9 | INV. G06Q10/06 |
| X | US 2010/185426 A1 (GANESAN RAJESH [US] ET AL) 22 July 2010 (2010-07-22) * paragraphs [0021] - [0024]; figures 1-12 * ----- | 1-9 | |

TECHNICAL FIELDS
SEARCHED        (IPC)

G06Q

The present search report has been drawn up for all claims

| Place of search | Date of completion of the search | Examiner |
|---|---|---|
| Munich | 4 December 2018 | Bîrlescu, V |

EPO FORM 1503 03.82 (P04C01)

## ANNEX TO THE EUROPEAN SEARCH REPORT
## ON EUROPEAN PATENT APPLICATION NO.

EP 18 19 8540

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2018

| Patent document cited in search report | Publication date | Patent family member(s) | Publication date |
|---|---|---|---|
| US 2002002548 A1 | 03-01-2002 | DE 10106869 A1 | 27-09-2001 |
| | | JP 2001297174 A | 26-10-2001 |
| | | US 6640098 B1 | 28-10-2003 |
| | | US 2001047264 A1 | 29-11-2001 |
| | | US 2001049275 A1 | 06-12-2001 |
| | | US 2001049277 A1 | 06-12-2001 |
| | | US 2002002548 A1 | 03-01-2002 |
| | | US 2002002575 A1 | 03-01-2002 |
| | | US 2002002594 A1 | 03-01-2002 |
| | | US 2002004736 A1 | 10-01-2002 |
| US 2010185426 A1 | 22-07-2010 | NONE | |

EPO FORM P0459

For more details about this annex : see Official Journal of the European Patent Office, No. 12/82

**EP 3 467 734 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201721035511